# EUROPEAN PATENT SPECIFICATION

(11) **EP 1 024 314 B1**
(45) Date of publication and mention of the grant of the patent: **09.04.2003**
(21) Application number: 99830040.4
(22) Date of filing: 28.01.1999
(51) Int. Cl.: F16H 7/12, B23D 55/10, B23D 57/00, B24B 21/20, B27B 13/08, B62D 55/30, B62M 9/16, B28B 17/00, B61B 12/00

(54) **Device for tensioning flexible elements wound onto pulleys**
Vorrichtung zum Spannen von um Rollen gewickelten flexiblelen Elementen
Dispositif de serrage des éléments flexibles enroulés sur des poulies

(43) Date of publication of application: 02.08.2000
(73) Proprietor: Pellegrini Meccanica S.p.a., 37135 Verona (IT)
(72) Inventor: Pellegrini, Marco Terzo, 37031 Illasi (Verona) (IT)
(74) Representative: Lanzoni, Luciano

(56) References cited:
- DE-C- 646 799
- DE-C- 885 475
- FR-A- 556 595

## Description

The present invention relates to a device for tensioning flexible elements wound onto pulleys, such as, for example, belts, cables, drive chains or also flexible elements having the function of tools, such as diamond-coated wires used in the stone-processing sector in machines for cutting marble, granite or other stone materials.

Although the present invention may find an application in numerous sectors of the art, below for the sake of simplicity of the description, specific reference will be made to the sector of machines for cutting stone materials, as mentioned above.

In this sector, for many years machines which use a diamond-coated wire have been known, said wire being mounted endlessly on two pulleys (i.e. a driving pulley and a driven pulley, called "flywheels") and, moving at high speed, being used to cut blocks or slabs of marble or granite.

The problems of tensioning the diamond-coated wire are solved, in these machines, usually by displacing the flywheel-carrying shaft (i.e. the driven shaft) with the aid of suitable moving means which are mainly hydraulic.

Smaller tensioning flywheels may also be provided.

In recent years machines for producing slabs have been provided, said machines using several diamond-coated wires which are mounted on flywheels with multiple races or using a single wire which is made to pass over a multiplicity of flywheels so as to create a situation where there is a multiplicity of parallel cutting planes.

Again in recent years, machines for producing slabs have been developed, said machines using a multiplicity of single diamond-coated wires which are wound endlessly onto a corresponding multiplicity of pairs of flywheels, where the adjacent flywheels are arranged very close to one another.

The problems of tensioning the diamond-coated wire in these types of machines at present have been only partially overcome or have not been overcome at all.

In the case of flywheels with multiple races, tensioning is performed in a manner similar to that used in traditional single-wire machines as mentioned above.

In the case of machines using multiple flywheels, the tensioning system of the known type envisages that all the driven flywheels on which the wire is partially wound are tensioned simultaneously.

This type of tensioning performed in an identical manner and simultaneously on all the flywheels may give rise to problems, some of which are serious. In particular in the following cases:
- if the diameters of the flywheels are even only slightly different from those of the similar adjacent flywheels. In fact, in this case, there would be undesirable wear of the wire or deformation thereof, due to friction;
- if the length of the wires differs, even only slightly, from wire to wire;
- if the tensioning displacement of the group of flywheels is not perfectly parallel to itself;
- if the flywheel-carrying shaft has a camber, even of a small degree, due to the weight of the flywheels themselves, and to the load applied.

It is also known from German patent DE 646 799 a device for tensioning flexible elements wound onto pulleys of the kind described in the preamble of claim 1.

Such device comprises a pulley able to perform translatory movements relative and perpendicular to the shaft on which it is rotatably mounted, respectively between an first position, where minimum tensioning of the flexible element associated with the pulley occurs, and a second position, where maximum tensioning of the flexible element occurs. Tensioning means are further provided in order to cause the translatory movements of the pulley with respect to the shaft. The tensioning means are housed inside an opening provided in the central zone of the pulley, and which is delimited, in the plane in which the pulley lies by the mainly annular extension of a bearing onto which the pulley is keyed, and transversely to the plane in which the pulley lies by the two opposite surfaces of the pulley. The tensioning means are constituted by a plurality of springs which are interposed between the shaft and the bearing in order to push the pulley towards the second position. The plurality of springs make the device and the adjustment of the roller-shaped flywheel complex and difficult.

Taking into account these drawbacks, the technical problem to be solved is that of being able to perform individual and separate tensioning for each flywheel but moreover with extremely small dimensions (so that the flywheels may be arranged next to one another at a distance as required - this being the factor which determines the thickness of the slabs cut by the wire).

The main object of the present invention is therefore that of overcoming the drawbacks of the known art by solving the technical problem indicated above.

Another object of the invention is that of providing a constructionally simple, reliable and low-cost tensioning device.

These and other objects are all achieved by the tensioning device in question, the main features of which are described in the claims which follow.

Further characteristic features and advantages of the invention will emerge more clearly from the detailed description which follows, of an embodiment of the device in question, provided purely by way of a nonlimiting example in the accompanying drawings, with reference to the stone-processing sector, in which:
- Figure 1 shows a multiple-wire machine for cutting stone blocks;
- Figure 2 is a plan view of the machine according to Figure 1;
- Figure 3 shows a side view of a pulley (or flywheel) provided with a tensioning device in question (without protective casing) in a first preferred embodiment thereof;
- Figure 4 is a plan view of the group of pulleys (or flywheels) according to Figure 3;
- Figure 5 shows a first preferred embodiment of the device in question (enlarged detail from Figure 3);
- Figure 6 shows a multiple-wire machine where the (fine) tensioning device in question is applied to smaller-diameter tensioning pulleys, while traditional (rough) tensioning is performed by the drive pulleys (or flywheels) ;
- Figure 7 shows a multiple-wire machine in which the (fine) tensioning device in question is applied to the drive pulleys (or flywheels), while traditional (rough) tensioning is performed by smaller-diameter tensioning pulleys.

With reference to the accompanying figures, 1 denotes a block of stone to be cut into parallel slabs.

The cut is performed by a machine (substantially of a known type and therefore not described in detail), in which a plurality of diamond-coated wires 2 parallel to one another are endlessly mounted on a corresponding multiplicity of pairs of flywheels 3 and 4 (driving pulleys and driven pulleys). The diamond-coated wires 2, owing to their high speed of movement, perform the parallel cuts 1 in the block 1 according to a technique known per se.

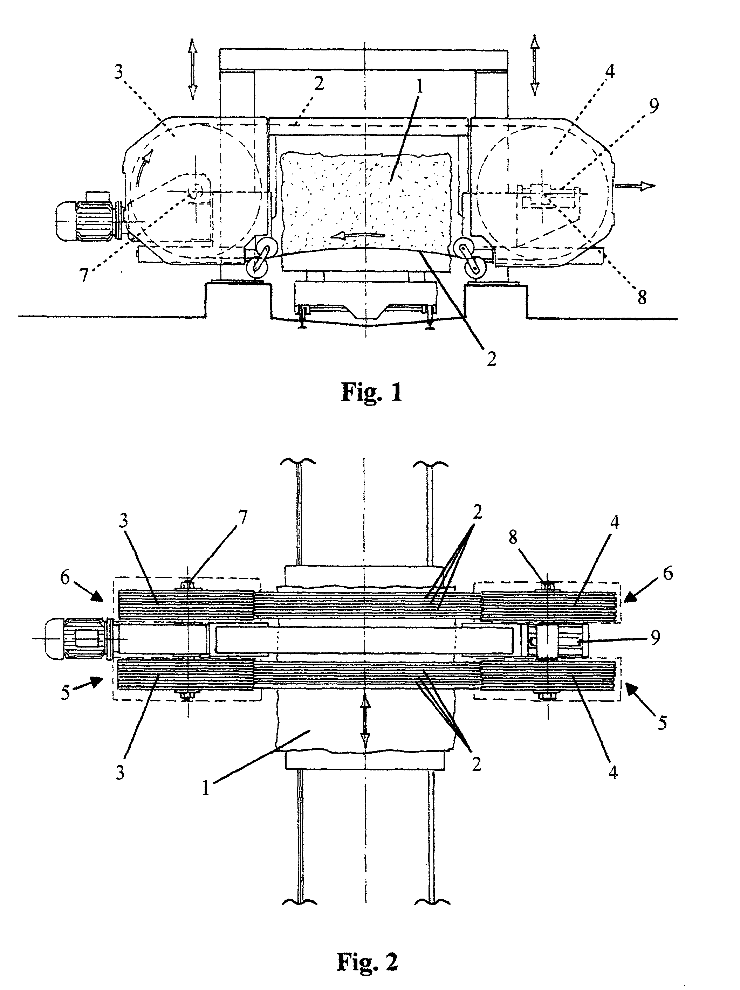

Figures 1 and 2 show one of these machines, in particular provided with two groups 5 and 6 of diamond-coated wires 2, in which both the driving flywheels 3, which are parallel to one another, and the idle flywheels 4, which are also parallel to one another, are mounted respectively on a single driving shaft 7 and a single driven shaft 8.

Still with reference to Figures 1 and 2, it can be noted that a so-called "rough" tensioning member is provided, said member consisting, in a manner known per se, of a hydraulic cylinder 9 associated with the driven shaft 8 which allows all the wires 2 of the groups 5 and 6 mounted on the flywheels 4 to be tensioned simultaneously.

A so-called "fine" tensioning device is also envisaged, said device (forming the subject of the present invention), being associated with each individual flywheel which allows tensioning, in a specific manner, of the wire 2 mounted on this flywheel 4.

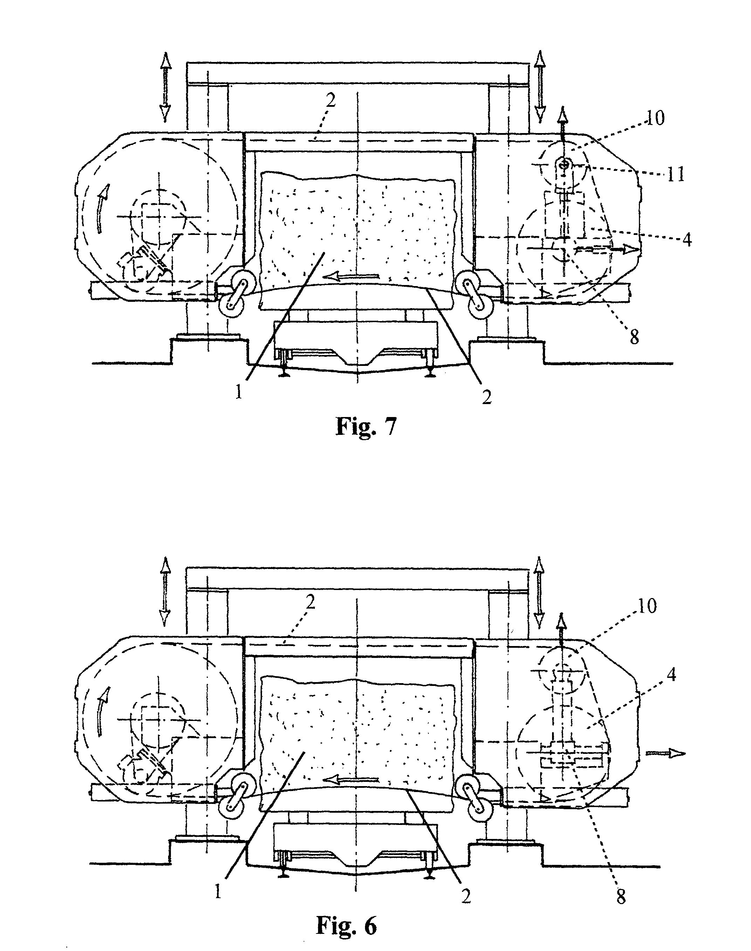

In the example shown in Figure 6, the so-called traditional "rough" tensioning is performed by the shaft 8 which is made to perform a translatory movement by the hydraulic cylinder 9. The "fine" tensioning is performed by small individual tensioning flywheels which, in the example according to Figure 6, are positioned above the idle flywheels 4.

On the other hand, in the example shown in Figure 7, the "fine" tensioning is performed by the individual flywheels 4, while the traditional "rough" tensioning is performed by displacing the shaft 11 of the small tensioning flywheels 10.

The device according to the present invention, which allows tensioning of each single diamond-coated wire 2 in an independent manner, is achieved as described below.

Each idle flywheel 4 (or the individual small flywheels 10, depending on the circumstances) is able to perform translatory movements relative and perpendicular to the shaft 8 on which it is rotatably mounted, respectively between an advanced position, where minimum tensioning of the wire 2 occurs, and a retracted position, where instead maximum tensioning of the wire 2 itself occurs. For this purpose, suitable tensioning means are provided.

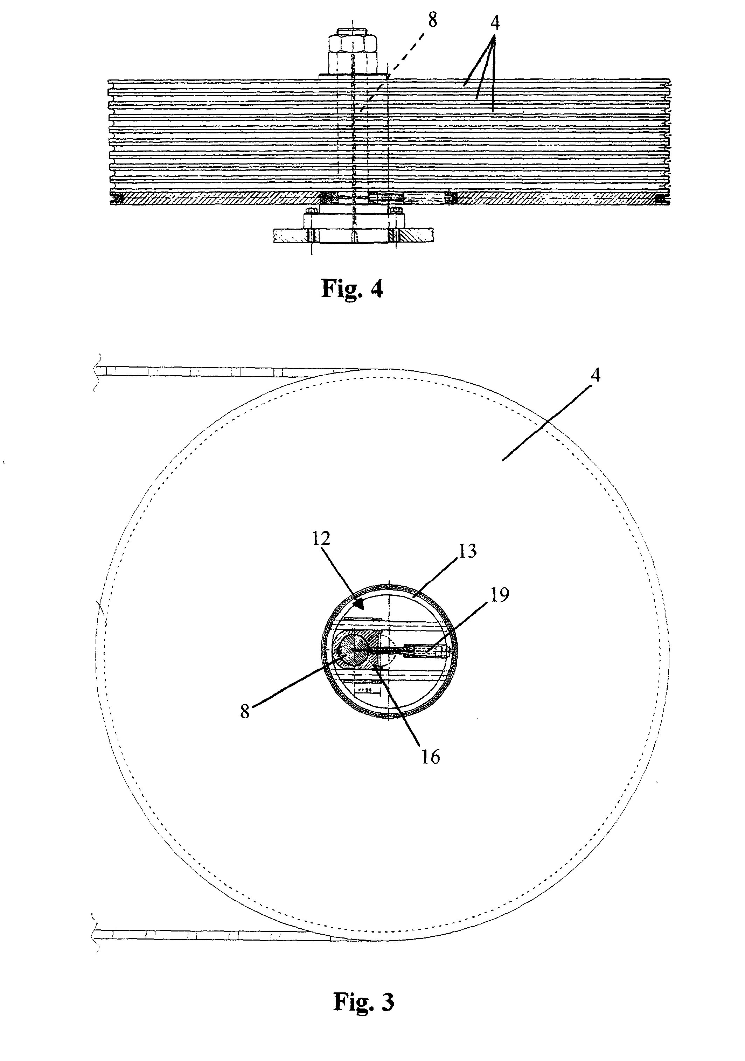

With reference to Figures 3 to 5, it can be noted that these tensioning means are housed inside an opening 12 which has very small dimensions and is substantially disk-shaped. This opening is located inside the central zone of the flywheel 4 and is delimited perimetrally, in the plane where the flywheel 4 itself lies, by the internal rim of a ball bearing 13 onto which the flywheel 4 is keyed. Transversely with respect to this plane in which it lies, the opening 12 is delimited by two parallel surfaces (not shown) defined by the two opposite sides of the flywheel 4.

On the basis of this configuration, the opening 12 housing the "fine" tensioning means has a fixed position, relative to the rotational movement of the flywheel 4 about the shaft 8, i.e. the opening 12 and everything which it contains does not rotate.

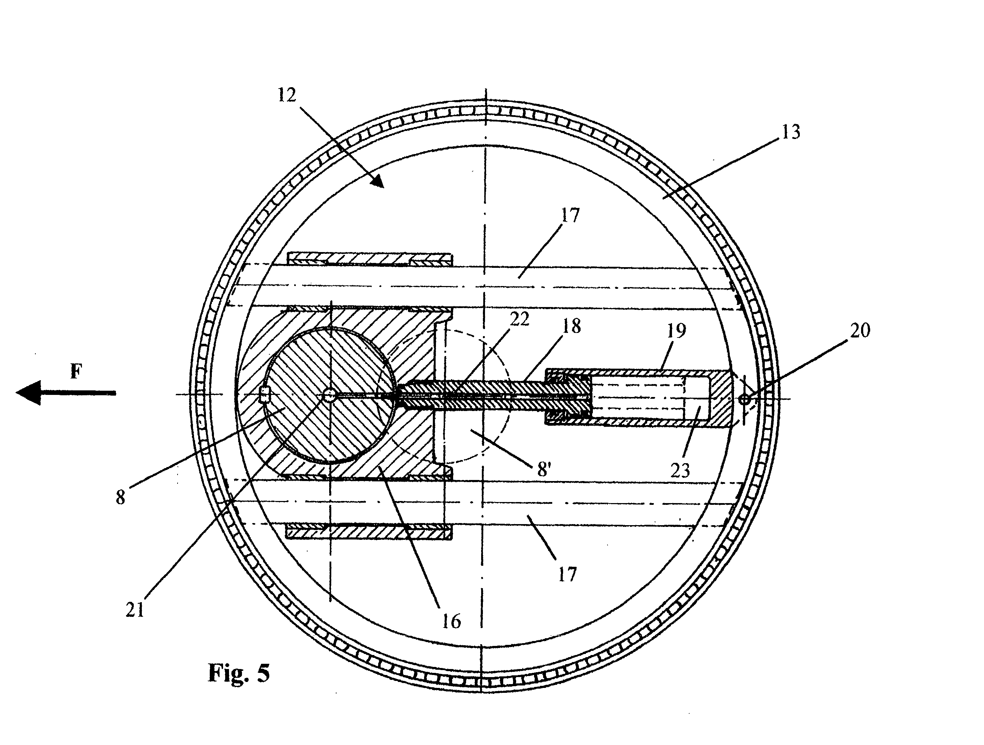

With reference to the preferred embodiment of the "fine" tensioning means (shown in Figure 5), 16 denotes a sliding shoe which is integral with the shaft 8 and able to slide along parallel guides 17, the ends of which are fixed to the internal rim of the bearing 13.

The rod 18 of a hydraulic jack 19 which is hingeably mounted at 20 on the internal rim of the bearing 13 is fixed to the sliding shoe 16.

The hydraulic fluid under pressure is supplied from a central duct 21 formed in the shaft 8 and then passes, through the duct 22 formed inside the rod 18 until it reaches the chamber 23 of the jack 19.

On the basis of that described, it is obvious that the pressure of the hydraulic fluid causes translation of the sliding block 16 relative to the bearing 13. This results in the relative translation of the flywheel 4 with respect to the shaft 8 with the consequent (positive or negative) tensioning of the diamond-coated wire 2 mounted on that flywheel 4.

This obviously occurs for all the flywheels 4 arranged alongside one other. It should be noted that, owing to the extremely small dimensions of the opening 12 housing the tensioning device in question, it is possible to arrange the flywheels 4 even very closely alongside one another; this allows cuts to be performed on the stone block 1 which are very close to each other and thus obtain relatively small thicknesses of the slabs.

In Figure 5, 8' denotes the position (shown in broken lines) of the shaft 8 where there is a certain forward movement of the flywheel 4 corresponding to a smaller degree of tensioning of the wire 2 compared to the position of the flywheel 4 with respect to the shaft 8, shown in continuous lines.

## Claims

1. Device for tensioning flexible elements wound onto pulleys, wherein a pulley (4) is able to perform translatory movements relative and perpendicular to a shaft (8) on which it is rotatably mounted, respectively between an advanced position, where minimum tensioning of the flexible element (2) associated with the pulley (4) occurs, and a retracted position, where maximum tensioning of the flexible element (2) occurs, tensioning means being provided in order to cause said translatory movements of the pulley (4) with respect to the shaft (8),
said tensioning means being housed inside an opening (12) inside the central zone of the pulley (4), said opening (12) being delimited, in the plane in which the pulley (4) lies, by the mainly annular extension of a bearing (13) onto which said pulley (4) is keyed, and transversely to the plane in which the pulley (4) lies, by the two opposite surfaces of the pulley (4), said opening (12) therefore having a fixed position relative to the rotational movement of the pulley (4) about said shaft (8),
**characterized in that** said tensioning means comprises at least one sliding shoe (16) which is integral with the shaft (8) and which has, associated with it, at least one hydraulic jack (19) connected at one end to the said bearing (13) and at the other end to the said sliding shoe (16), fluid under pressure being made to circulate in a chamber (23) present inside the hydraulic jack (19), in order to cause relative translation of said sliding shoe (16) with respect to said bearing (13) which results in the relative translation of said pulley (4) with respect to said shaft (8).

2. Device according to Claim 1, **characterized in that** said sliding shoe (16) is able to slide along parallel guides (17) fixed at their ends to the said bearing (13).

3. Device according to Claim 1, **characterized in that** the fluid under pressure is connected to the chamber (23) of said hydraulic jack (19) by means of a first duct (22) passing through the rod (18) of said hydraulic jack (19), said first duct (22) being in turn hydraulically connected to a second duct (21) extending inside the shaft (8) from which the fluid under pressure is supplied.

## Patentansprüche

1. Vorrichtung zum Spannen von um Rollen gewickelten flexiblen Elementen, bei welcher eine Rolle (4) in der Lage ist, Translationsbewegungen im Verhältnis und lotrecht zu einer Welle (8) auszuführen, auf welcher sie drehbar montiert ist, und zwar jeweils zwischen einer vorgeschobenen Position, welcher eine minimale Spannung des der Rolle (4) zugeordneten flexiblen Elementes (2) entspricht, und einer zurückgezogenen Position, welcher eine maximale Spannung des flexiblen Elementes (2) entspricht, wobei Spannmittel vorgesehen sind, um die Rolle (4) im Verhältnis zu der Welle (8) die genannten Translationsbewegungen ausführen zu lassen, wobei die genannten Spannmittel im Inneren einer Öffnung (12) in dem mittleren Bereich der Rolle (4) angeordnet sind, wobei die genannte Öffnung (12) auf der Ebene, auf welcher die Rolle (4) liegt, durch die vorwiegend ringförmige Ausdehnung eines Lagers (13) begrenzt wird, auf das die genannte Rolle (4) aufgezogen ist, und quer zu der Liegeebene der Rolle (4) durch die beiden sich gegenüberliegenden Oberflächen der Rolle (4), wobei die genannte Öffnung (12) daher eine feststehende Position im Verhältnis zu der Drehbewegung der Rolle (4) um die genannte Welle (8) einnimmt, **dadurch gekennzeichnet, dass** die genannten Spannmittel wenigstens einen Gleitschuh (16) enthalten, welcher fest mit der Welle (8) verbunden ist, und welcher zugeordnet wenigstens eine Hydraulikwinde (19) aufweist, die mit einem Ende an das genannte Lager (13) angeschlossen ist und mit den anderen Ende an den genannten Gleitschuh (16), wobei eine unter Druck stehende Flüssigkeit in einer im Inneren der Hydraulikwinde (19) vorhandenen Kammer (23) in Umlauf gebracht wird, um die entsprechende Translation des genannten Gleitschuhs (16) im Verhältnis zu dem genannten Lager (13) zu bewirken, welche sich in der entsprechenden Translation der genannten Rolle (4) im Verhältnis zu der genannten Welle (8) ausdrückt.

2. Vorrichtung nach Patentanspruch 1, **dadurch gekennzeichnet, dass** der genannte Gleitschuh (16) in der Lage ist, sich entlang von parallelen Führungen (17) zu bewegen, die mit ihren Enden an dem genannten Lager (13) befestigt sind.

3. Vorrichtung nach Patentanspruch 1, **dadurch gekennzeichnet, dass** die unter Druck stehende Flüssigkeit mit der Kammer (23) der Hydraulikwinde (19) in Verbindung ist, und zwar mit Hilfe einer durch den Schaft (18) der genannten Hydraulikwinde (19) verlaufenden ersten Leitung (22), wobei die genannte erste Leitung (22) wiederum hydraulisch an eine zweite Leitung (21) angeschlossen ist, welche sich im Inneren der Welle (8) erstreckt, aus welcher die unter Druck stehende Flüssigkeit zugeführt wird.

## Revendications

1. Dispositif de serrage des éléments flexibles enroulés sur des poulies où une poulie (4) est en mesure d'effectuer des mouvements en translation relativement et perpendiculairement à un arbre (8) sur lequel elle est montée de façon rotatoire respectivement entre une position avancée, où une tension minimale de l'élément flexible (2) associé à la poulie (4) se vérifie, et une position reculée où une tension maximale de l'élément flexible (2) se vérifie, un moyen de tension étant fourni pour induire lesdits mouvements en translation de la poulie (4) par rapport à l'arbre (8), ledit moyen de tension logeant à l'intérieur d'une ouverture (12) dans la zone centrale de la poulie (4), ladite ouverture (12) étant délimitée, dans le plan dans lequel la poulie (4) est posée, par l'extension principalement annulaire du palier (13) sur lequel ladite poulie (4) est fixée, et transversalement au plan dans lequel la poulie (4)est posée, par les deux surfaces opposées de la poulie (4), ladite ouverture (12) ayant ainsi une position fixe par rapport au mouvement rotatoire de la poulie (4) autour dudit arbre (8), **caractérisé en ce que** ledit moyen de tension comprend au moins un patin de glissement (16) faisant partie intégrante de l'arbre (8) et qui a, associé à celui-ci, au moins un vérin hydraulique (19) relié à une extrémité audit palier (13) et à l'autre extrémité audit patin de glissement (16), du fluide sous pression circulant dans une chambre (23) présente à l'intérieur du vérin hydraulique (19), de façon à causer la translation relative dudit patin de glissement (16) par rapport audit palier (13) ayant comme effet la translation relative de ladite poulie (4) par rapport audit arbre (8).

2. Un dispositif selon la Revendication 1, **caractérisé en ce que** ledit patin de glissement (16) est en mesure de glisser le long de coulisses parallèles (17) fixées à leurs extrémités audit palier (13).

3. Un dispositif selon la Revendication 1, **caractérisé en ce que** le fluide sous pression est relié à la chambre (23) dudit vérin hydraulique (19) par le biais d'un premier conduit (22) passant à travers la tige (18) dudit vérin hydraulique (19), ledit premier conduit (22) étant à son tour relié par système hydraulique à un second conduit (21) se trouvant à l'intérieur de l'arbre (8) par où passe le fluide sous pression.
